# EUROPEAN PATENT APPLICATION

(11) **EP 4 607 822 A1**
(43) Date of publication of application: **27.08.2025**
(21) Application number: 24159589.1
(22) Date of filing: 26.02.2024
(51) Int. Cl.: H04B 10/116

(54) **METHOD FOR WIRELESS COMMUNICATION USING WHITE LIGHT OF A TUNABLE WHITE LUMINAIRE**

(71) Applicant: Zumtobel Lighting GmbH, 6850 Dornbirn (AT)
(72) Inventor: Lorenz, Stefan, 6851 Dornbirn (AT); Martin, Kenneth, 6851 Dornbirn (AT)
(74) Representative: Beder, Jens

(57) **Abstract**

The present invention provides a method for wireless communication using white light of a tunable white luminaire. The tunable white luminaire comprises a first and second light source emitting white light of a first type and white light of a second type, respectively. The method comprises controlling (Si) the first light source to emit a first amount of white light of the first type and the second light source to emit a second amount of white light of the second type. The method comprises communicating (S2) information by changing a ratio between the first amount and the second amount; wherein the change of the ratio encodes the information.

## Description

The present invention relates to a method for wireless communication using white light of a tunable white luminaire, a method for receiving information encoded on white light, a control entity for controlling a tunable white luminaire, and a tunable white luminaire.

For communication in in with luminaires, modulation of visible light may be used. Such communication is known as "visible light communication". In order for the human eye to not see such visible light communication, such luminaires are optimized for high-speed communication, e.g. with more than 100 modulations per second. This allows avoiding visible light level changes, which are visible at speeds smaller than 100 Hz, in case modulation depth is large enough. Enabling a luminaire for modulation with a frequency that is greater than 100 Hz is costly and limited by luminaire size, e.g. size of a light emitting diode (LED) module used in the luminaire as a light source.

Attaching additional LEDs and/or emitters, such as vertical cavity surface emitting lasers (VCSELs), to a luminaire for faster modulated light may be done in the near infrared (IR) for improving noise immunity and avoiding visible effects. This however means extra hardware in the luminaire, which results in a more complex manufacturing and greater costs.

Using color light modulation (such as red versus green lighting giving a mixed yellow) is limited to colored light or white light with low color rendering, which are not suitable for general illumination. In this case, extra hardware in the luminaire is needed, which results in a more complex manufacturing and greater costs.

Therefore, it is an object of the present invention to provide a wireless communication function usable in a luminaire for illumination without the need of additional hardware in the luminaire. It is in particular an object of the present invention to provide a wireless communication function usable in a luminaire for illumination without the above-described drawbacks.

These and other objects, which become apparent upon reading the following description, are solved by the subject matter of the independent claim. The dependent claims refer to preferred embodiments of the invention.

According to a first aspect of the invention, a method for wireless communication using white light of a tunable white luminaire is provided. The tunable white luminaire comprises a first and second light source emitting white light of a first type and white light of a second type, respectively. The method comprises controlling the first light source to emit a first amount of white light of the first type and the second light source to emit a second amount of white light of the second type. The method comprises communicating information by changing a ratio between the first amount and the second amount; wherein the change of the ratio encodes the information.

Thus, the first aspect proposes to use a conventional tunable white luminaire with at least a first and second light source emitting white light of a first type and white light of a second type, respectively, wherein control of the light emission of the first and second light source allows a wireless communication without the need of additional hardware. This allows an invisible transmission of information using the usual light emission by the tunable white luminaire during standard operation of the luminaire, i.e. during the illumination by the luminaire. For this, the tunable white light source does not need to be adapted, i.e. no additional hardware is needed (e.g. no dedicated communication equipment, no high-speed driver, no dedicated communication light source needed). In other words, standard electronics and standard light source are usable. Moreover, this allows communication of information in low dim states. Further, the communication of the information may be invisible as the method of the first aspect allows an improvement over amplitude modulation by using color flicker tolerance of the human eye with the at least two white light sources (i.e. the first and second light source). Furthermore, the method of the first aspect is tolerant to different light sources as the encoding of the information lays in a difference of signal, but not in amplitude.

Changing the ratio between the first amount and the second amount changes the spectrum of the white light emitted by the tunable white luminaire. The white light emitted by the tunable white luminaire is formed by the first amount of white light of the first type and the second amount of white light of the second type. For each light source, the first amount and the second amount may be between 0% and 100%. An amount of 0% means that no light is emitted, and an amount of 100% means that the maximum emittable light is emitted, i.e. the maximum light intensity is emitted. The total amount of light is often limited to 100%. For example the settings of two light sources may be selected to be 100%/0%, 70%/30%, 50%/50%, 30%/70%, and 0%/100%. It is to be noted that the above provided ratios are only provides as examples. In case that the light sources have different outputs, it is also possible to adjust the output of the light sources accordingly, for example 90%/0%, 45%/50%, 0%/100%.

According to the first aspect, it is proposed to communicate information by modulating a differential output of the first and second light source of the tunable white luminaire.

The first and second light source may be referred to as "first white channel" and "second white channel", respectively. The tunable white luminaire comprising at least a first and second white light source may be a conventional luminaire. The characteristic, e.g. correlated color temperature (CCT), of the white light emitted by the tunable white luminaire and, thus, of the illumination by the tunable white luminaire may be set by setting the ratio between the first amount and second amount of white light emitted by the first and second light source, respectively.

For example, the first light source may emit cold white light of a CCT e.g. equaling 8000 K (i.e. the white light of the first type may be cold white light of a CCT e.g. equaling 8000 K) and the second light source may emit warm white light of a CCT e.g. equaling 2500 K (i.e. the white light of the second type may be warm white light of a CCT e.g. equaling 2500 K). In this example, the white light emittable by the tunable white luminaire may have a CCT between 2500 K and 8000 K depending on the ratio of the first and second amount. In a first example case, the first amount may be 0% and the second amount may be 100% and, thus, the white light of the tunable white luminaire is warm white light with a CCT of 2500 K. In a second example case, the first amount may be 100% and the second amount may be 0% and, thus, the white light of the tunable white luminaire is cold white light with a CCT of 8000 K. In case each of the first amount and the second amount is 50%, the white light of the tunable white luminaire has a CCT that is greater than 2500 K and smaller than 8000K. That is in the aforementioned third example case, the white light of the tunable white luminaire will be colder than the white light of the aforementioned first example case, but warmer than the white light of the aforementioned second example case.

The first and second light source may comprise one or more light emitting diodes (LEDs). The first and second light source are not limited to a specific implementation, e.g. a specific light source type.

The communication may be used for advertising location dependent information (e.g. beaconing). Location dependent information may comprise for example advertisement, museum object link etc. The communication may be used for transmission of commissioning data and/or configuration data, such as an address of the luminaire (e.g. DALI address), password for local connection (e.g. a password of a WLAN network) etc. The communication may be used for transmission of luminaire state data, such as temperature of luminaire, health status of luminaire, set point of luminaire etc. The communication may be used for transmission of data of the luminaire's environment. The communication may be used for transmission of data such as service data, serial number of the luminaire, position of luminaire etc.

The tunable white luminaire may be an indoor luminaire or outdoor luminaire. For example, the luminaire may be a street luminaire. For example, the tunable white luminaire may be a ceiling mounted luminaire, a spot luminaire, a desk luminaire etc. The present invention is not limited to a specific tunable white luminaire type.

Communicating the information may comprise changing the ratio between the first amount and the second amount with a frequency that is not visible for the human eye. The human eye is not very sensitive to color or hue variation and a frequency of 10 Hz to 200 Hz, which is achievable, is considered sufficient to avoid that the change can be recognized by a human. This is on advantage of the invention. The modulation frequency can be low and standard electronics for lighting can be used. In addition or alternatively, communicating the information may comprise changing the ratio between the first amount and the second amount by a degree that is not visible for the human eye. For example, the variation can be selected to be up to 5% of the total range. For a system with a centerpoint of 50%/50%, the variation could be from 48% /52% to 53%/47%.

The human eyes is less sensitive to color flicker of illumination compared to a brightness flicker or intensity flicker of illumination. Thus, changing of the ratio between the first amount and the second amount and, thus, encoding of the information may occur slower compared to a wireless communication using visible light, where the light intensity is changed for the encoding.

Changing the ratio between the first amount and second amount may comprise changing the first amount between at least two values. In addition or alternatively, changing the ratio between the first amount and second amount may comprise changing the second amount between at least two values.

Optionally, the first amount may be changed between three or more values. Optionally, the second amount may be changed between three or more values.

For example, the first amount may be changed between 50% and 100%. The same may apply for the second amount.

Optionally controlling the first light source and the second light source comprises controlling the first light source to emit white light with a first correlated color temperature (CCT) and the second light source to emit white light with a second CCT that is different from the first CCT.

In other words, the white light of the first type and the white light of the second type may be the white light with the first CCT and the white light with the second CCT, respectively. As a result, changing the ratio between the first amount and the second amount may cause the CCT of the white light emitted by the tunable white light to change. The first CCT and the second CCT may be in a range between 1800 Kelvin and 10000 Kelvin. Optionally, one of the first CCT and second CCT is in a range between 4500 Kelvin and 7000 Kelvin, and the other of the first CCT and second CCT is greater than 7000 Kelvin.

The method may comprise communicating the information by changing the ratio between the first amount and the second amount such that the CCT of the white light emitted by the tunable white luminaire is modulated (i.e. changed) around a set CCT, e.g. by a degree of 1%, 5% or 10% of the set CCT; wherein the modulation of the CCT encodes the information. In other words, the method may comprise communicating the information by changing the ratio between the first amount and the second amount such that the CCT of the white light emitted by the tunable white luminaire is modulated between a first CCT below the set CCT and a second CCT above the set CCT, e.g. with a difference between the first and second CCT being 1%, 5% or 10% of the set CCT. For example, the method comprises communicating the information by changing the ratio between the first amount and the second amount such that the CCT of the white light emitted by the tunable white luminaire is modulated between a set CCT and a CCT above or below the set CCT, e.g. by a degree of 1%, 5% or 10% of the set CCT. Herein, the set CCT may be a target CCT or a desired CCT of the white light of the tunable white luminaire, e.g. for providing illumination. It is preferred to perform the modulation around a center point. However, if this is not possible, asymmetric modulation may be used. For example, 0%/100% for 80% of the modulation period and 5%795% for the rest of the modulation period would result in effective 1%99% light color mixing.

Optionally, controlling the first light source and the second light source comprises controlling the first light source to emit white light with a locus in the CIE color space that is a first distance away from the black body locus (BBL) and the second white light source to emit white light with a locus in the CIE color space that is a second distance away from the BBL that is different from the first distance.

In other words, the white light of the first type and the white light of the second type may be the white light with the locus in the CIE color space being the first distance away from the BBL and the white light with the locus in the CIE color space being the second distance away from the BBL, respectively. As a result, changing the ratio between the first amount and the second amount may cause a distance of a locus of the white light emitted by the tunable white light in the CIE color space to the BBL to change. The passages "a distance of a locus from the BBL away" and "a distance of a locus to the BBL" may be understood as synonyms.

The method may comprise communicating the information by changing the ratio between the first amount and the second amount such that a distance of the tunable white luminaire's white light's locus in the CIE color space to the BBL is modulated (i.e. changed) around a set distance, e.g. by 3SDCM, 10SDCM or 30SDCM (Standard Deviation Color Matcching); wherein the modulation of the distance encodes the information. In other words, the method may comprise communicating the information by changing the ratio between the first amount and the second amount such that the distance of the tunable white luminaire's white light's locus in the CIE color space to the BBL is modulated between a first distance below the set distance and a second distance above the set distance, e.g. with a difference between the first and second distance being 3SDCM, 10SDCM or 30SDCM. For example, the method comprises communicating the information by changing the ratio between the first amount and the second amount such that the distance of the tunable white luminaire's white light's locus in the CIE color space to the BBL is modulated between a set distance and a distance above or below the set distance, e.g. by 3SDCM, 10SDCM or 30SDCM. Herein, the set distance may be a target distance or a desired distance of the locus in the CIE color space of the white light of the tunable white luminaire to the BBL, e.g. for providing illumination.

Optionally, controlling the first light source and the second light source comprises controlling the first white light source to emit white light with a first melanopic effective spectral component and the second white light source to emit white light with a second melanopic effective spectral component that is different from the first melanopic effective spectral component.

In other words, the white light of the first type and the white light of the second type may be the white light with the first melanopic effective spectral component and the white light with the second melanopic effective spectral component, respectively. As a result, changing the ratio between the first amount and the second amount causes the melanopic content of the white light emitted by the tunable white light to change.

The method may comprise communicating the information by changing the ratio between the first amount and the second amount such that the melanopic content of the white light emitted by the tunable white luminaire is modulated (i.e. changed) around a set melanopic content, e.g. by a degree of up to 50%, preferably 10% of the set melanopic content; wherein the modulation of the melanopic content encodes the information. In other words, the method may comprise communicating the information by changing the ratio between the first amount and the second amount such that the melanopic content of the white light emitted by the tunable white luminaire is modulated between a first melanopic content below the set melanopic content and a second melanopic content above the set melanopic content, e.g. with a difference between the first and second melanopic content being up to 50%, preferably 10% of the set melanopic content. For example, the method comprises communicating the information by changing the ratio between the first amount and the second amount such that the melanopic content of the white light emitted by the tunable white luminaire is modulated between a set melanopic content and a melanopic content above or below the set melanopic content, e.g. by a degree of up to 50%, preferably 10% of the set melanopic content. Herein, the set melanopic content may be a target melanopic content or a desired melanopic content of the white light of the tunable white luminaire, e.g. for providing illumination.

A change in the melanopic content of the white light is not visible to the human eye. That is, a change of the spectrum of the white light caused by changing the melanopic content of the white light is invisible for the human eye.

Controlling the first light source and the second light source may comprise controlling the first light source and the second light source to emit white light with the same CCT. The same CCT in the sense of the present invention includes minor deviations, it is not necessary to keep the CCT constant.

In other words, the white light of the first type and the white light of the second type may have the same CCT.

The method may comprise digitally encoding the information to a digital signal, and modulating the white light emitted by the tunable white luminaire according to the digital signal by changing the ratio between the first amount and the second amount according to the digital signal.

That is the information may be digitally modulated on the white light of the tunable white luminaire by changing the ratio between the first amount and the second amount.

Modulating the white light emitted by the tunable white luminaire according to the digital signal may done with a frequency in a frequency range. Optionally, modulating the white light emitted by the tunable white luminaire according to the digital signal may be done with a fixed frequency.

The frequency range may be between 1 and 100 Hz. Optionally, the frequency range is between 50 and 100 Hz. The fixed frequency may be a frequency between 1 and 100 Hz, optional between 50 and 100 Hz.

The method may comprise performing an amplitude modulation of at least one of the CCT, the distance of the locus in the CIE color space to the BBL and the melanopic content of the white light emitted by the tunable white luminaire by controlling a change of the first amount of the white light of the first type and/or the second amount of the white light of the second type.

The method may comprise performing a phase-shift keying modulation of at least one of the CCT, the distance of the locus in the CIE color space to the BBL and the melanopic content of the white light emitted by the tunable white luminaire by controlling a change of the first amount of the white light of the first type and/or the second amount of the white light of the second type.

Optionally, the tunable white luminaire comprises at least one further light source emitting white light of a further type that is different to the light of the first type and light of the second type. The method may comprise controlling the further light source to emit a third amount of white light of the further type. The method may comprise communicating information by changing a ratio between the first amount, the second amount and the third amount; wherein the change of the ratio encodes the information.

That is, the luminaire may comprise three or more light sources, wherein each light source emits white light of a respective type. The description of the tunable white luminaire with the first and second light source is correspondingly valid in case the tunable white luminaire comprises three or more light sources, i.e. three or more white channels.

In order to achieve the method according to the first aspect of the present invention, some or all of the above described optional features may be combined with each other.

According to a second aspect of the invention, a method for receiving information encoded on white light is provided. The method comprises decoding the information based on a change of at least one of the correlated color temperature (CCT) of the white light, the distance of the white light's locus in the CIE color space from the black body locus (BBL), and the melanopic content of the white light.

That is, the method comprises decoding the information by determining a change in the spectrum of the received white light due to a change of at least one of the correlated color temperature (CCT) of the white light, the distance of the white light's locus in the CIE color space from the black body locus (BBL), and the melanopic content of the white light.

For this a receiver may be used that is sensitive to at least one of CCT, the distance of the white light's locus in the CIE color space from the BBL and the melanopic content of the white light.

For example, in case the information is encoded on the white light by a modulation of the CCT, i.e. change of the CCT, the receiver maybe sensitive to the white light's CCT. For this the receiver may comprise a photodetector with suitable processing of the light measured.

For example, in case the information is encoded on the white light by a modulation of the distance of the white light's locus in the CIE color space from the BBL, i.e. change of the aforementioned characteristic of the white light, the receiver may be sensitive to the distance of the white light's locus in the CIE color space from the BBL. For this the receiver may comprise a photodetector with suitable processing of the light measured.

For example, in case the information is encoded on the white light by a modulation of the melanopic content of the white light, the receiver may be sensitive to the melanopic content of the white light. For this the receiver may comprise a photodetector with suitable processing of the light measured.

The receiver may be configured to measure at least one of the CCT of the white light, the distance of the white light's locus in the CIE color space from the BBL and the melanopic content of the white light with a frequency greater than 10 Hz, optionally a frequency between 50 and 100 Hz.

In case the information is digitally encoded on the white light, the receiver is configured to decode the digital encoding.

The receiver may be configured to decode information that is encoded, using the method of the first aspect, on white light.

According to a third aspect of the invention, a control entity for controlling a tunable white luminaire comprising a first and second white light source is provided, the first and second white light source being configured to emit white light of a first type and white light of a second type, respectively. The control entity is configured to perform the method according to the first aspect of the invention, as described above. That is the control entity is configured to control the first light source to emit a first amount of white light of the first type and the second light source to emit a second amount of white light of the second type. The control entity is configured to control a wireless communication of information by the tunable white luminaire by controlling the tunable white luminaire to change a ratio between the first amount and the second amount; wherein the change of the ratio encodes the information. In other words, the control entity is configured to control the tunable white luminaire such that the steps of the method of the first aspect are performed by the tunable white luminaire.

The control entity may be implemented by software and/or hardware. The control entity may comprise at least one of a controller, microcontroller, processor, microprocessor, application specific integrated circuit (ASIC) and field programmable gate array (FPGA).

The description of the method of the first aspect is correspondingly valid for the control entity of the third aspect.

The control entity may be configured to control the wireless communication of the information by the tunable white luminaire by controlling the tunable white luminaire to change the ratio between the first amount and the second amount with a frequency that is not visible for the human eye. In addition or alternatively, the control entity may be configured to control the wireless communication of the information by the tunable white luminaire by controlling the tunable white luminaire to change the ratio between the first amount and the second amount by a degree that is not visible for the human eye.

The control entity may be configured to control the tunable white luminaire such that changing the ratio between the first amount and second amount for communicating the information comprises changing the first amount between at least two values. In addition or alternatively, the control entity may be configured to control the tunable white luminaire such that changing the ratio between the first amount and second amount for communicating the information comprises changing the second amount between at least two values.

Optionally the control entity may be configured to control the first light source to emit white light with a first correlated color temperature (CCT) and the second light source to emit white light with a second CCT that is different from the first CCT.

Optionally, the control entity may be configured to control the first light source to emit white light with a locus in the CIE color space that is a first distance away from the black body locus (BBL) and the second white light source to emit white light with a locus in the CIE color space that is a second distance away from the BBL that is different from the first distance.

Optionally, the control entity may be configured to control the first white light source to emit white light with a first melanopic effective spectral component and the second white light source to emit white light with a second melanopic effective spectral component that is different from the first melanopic effective spectral component.

The control entity may be configured to control the first light source and the second light source to emit white light with the same CCT.

The control entity may be configured to control the tunable white luminaire to digitally encode the information to a digital signal. The control entity may be configured to control the tunable white luminaire to modulate its white light according to the digital signal by changing the ratio between the first amount and the second amount according to the digital signal.

The control entity may be configured to control the tunable white luminaire to modulate its white light according to the digital signal with a frequency in a frequency range. Optionally, the control entity may be configured to control the tunable white luminaire to modulate its white light according to the digital signal with a fixed frequency.

The control entity may be configured to control the tunable white luminaire to perform an amplitude modulation of at least one of the CCT, the distance of the locus in the CIE color space to the BBL and the melanopic content of its white light by controlling the tunable white luminaire to change the first amount of the white light of the first type and/or the second amount of the white light of the second type.

The control entity may be configured to control the tunable white luminaire to perform a phase-shift keying modulation of at least one of the CCT, the distance of the locus in the CIE color space to the BBL and the melanopic content of its white light by controlling the tunable white luminaire to change the first amount of the white light of the first type and/or the second amount of the white light of the second type.

Optionally, the tunable white luminaire comprises at least one further light source configured to emit white light of a further type that is different to the light of the first type and light of the second type. The control entity may be configured to control a wireless communication of information by the tunable white luminaire by controlling the tunable white luminaire to change a ratio between the first amount, the second amount and the third amount; wherein the change of the ratio encodes the information.

In order to achieve the control entity according to the third aspect of the present invention, some or all of the above-described optional features may be combined with each other.

According to a fourth aspect of the invention, a tunable white luminaire is provided. The tunable white luminaire comprises a first and second light source. The first light source is configured to emit a first amount of white light of a first type. The second light source is configured to emit a second amount of white light of a second first type. The tunable white luminaire is configured to communicate information by emitting white light and changing a ratio between the first amount and the second amount; wherein the change of the ratio encodes the information.

The tunable white luminaire may be an indoor luminaire or outdoor luminaire. For example the luminaire may be a street luminaire. For example, the tunable white luminaire may be a ceiling mounted luminaire, a spot luminaire, a desk luminaire etc. The present invention is not limited to a specific tunable white luminaire type.

The description of the method of the first aspect is correspondingly valid for the luminaire of the fourth aspect.

The first and second light source may comprise one or more light emitting diodes (LEDs). The first and second light source are not limited to a specific implementation, e.g. a specific light source type.

The tunable white luminaire may be configured to communicate the information by changing the ratio between the first amount and the second amount with a frequency that is not visible for the human eye. In addition or alternatively, the tunable white luminaire may be configured to communicate the information by changing the ratio between the first amount and the second amount by a degree that is not visible for the human eye.

The tunable white luminaire may be configured to change the ratio between the first amount and second amount by changing the first amount between at least two values. In addition or alternatively, the tunable white luminaire may be configured to change the ratio between the first amount and second amount by changing the second amount between at least two values.

Optionally the first light source is configured to emit white light with a first correlated color temperature (CCT) and the second light source is configured to emit white light with a second CCT that is different from the first CCT.

Optionally, the first light source is configured to emit white light with a locus in the CIE color space that is a first distance away from the black body locus (BBL) and the second white light source is configured to emit white light with a locus in the CIE color space that is a second distance away from the BBL that is different from the first distance.

Optionally, the first white light source is configured to emit white light with a first melanopic effective spectral component and the second white light source is configured to emit white light with a second melanopic effective spectral component that is different from the first melanopic effective spectral component.

The first light source and the second light source may be configured to emit white light with the same CCT.

The tunable white luminaire may be configured to digitally encode the information to a digital signal, and modulate its white light according to the digital signal by changing the ratio between the first amount and the second amount according to the digital signal.

The tunable white luminaire may be configured to modulate its white light according to the digital signal with a frequency in a frequency range. Optionally, the tunable white luminaire is configured to modulate its white light according to the digital signal with a fixed frequency.

The tunable white luminaire may be configured to perform an amplitude modulation of at least one of the CCT, the distance of the locus in the CIE color space to the BBL and the melanopic content of its white light by controlling a change of the first amount of the white light of the first type and/or the second amount of the white light of the second type.

The tunable white luminaire may be configured to perform a phase-shift keying modulation of at least one of the CCT, the distance of the locus in the CIE color space to the BBL and the melanopic content of its white light by controlling a change of the first amount of the white light of the first type and/or the second amount of the white light of the second type.

Optionally, the amplitude modulation may be a quadrature amplitude modulation (QAM). The amplitude modulation allows increasing a data rate of the communication.

Optionally, the tunable white luminaire comprises at least one further light source that is configured to emit white light of a further type that is different to the light of the first type and light of the second type. The further light source is configured to emit a third amount of white light of the further type. The tunable white luminaire may be configured to communicate information by changing a ratio between the first amount, the second amount and the third amount; wherein the change of the ratio encodes the information.

Optionally, the tunable white luminaire is configured to receive information encoded on white light. The tunable white luminaire may be configured to decode the information based on a change of at least one of the correlated color temperature (CCT) of the white light, the distance of the white light's locus in the CIE color space from the black body locus (BBL), and the melanopic content of the white light.

The description of the method of the second aspect may be correspondingly valid for the tunable white luminaire of the fourth aspect.

In order to achieve the tunable white luminaire according to the fourth aspect of the present invention, some or all of the above-described optional features may be combined with each other.

Each of the method according to the second aspect, the control entity according to the third aspect and the tunable white luminaire according to the fourth aspect achieves the same advantages as the method of the first aspect.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of a method according to an embodiment of the invention for wireless communication using white light of a tunable white luminaire.
- **FIG. 2**: shows an example of a control entity according to an embodiment of the invention for controlling a tunable white luminaire.
- **FIG. 3**: shows the CIE color space in a u'v'-graph, wherein the area of white light emission is indicated.
- **FIG. 4**: shows an example of the method of FIG. 1, in case the tunable white luminaire comprises two light sources emitting white light of different correlated color temperatures (CCT).
- **FIG. 5**: shows an example of the method of FIG. 1, in case the tunable white luminaire comprises three light sources emitting white light of different correlated color temperatures (CCT).
- **FIG. 6**: shows an example of the method of FIG. 1, in case the tunable white luminaire comprises two light sources emitting white light with different distances between the white light's locus in the CIE color space and the black body locus (BBL).
- **FIG. 7**: shows an example of the method of FIG. 1, in case the tunable white luminaire comprises three light sources emitting white light with different distances between the white light's locus in the CIE color space and the black body locus (BBL) and different correlated color temperatures (CCT).

In the FIGs., corresponding elements have the same reference signs.

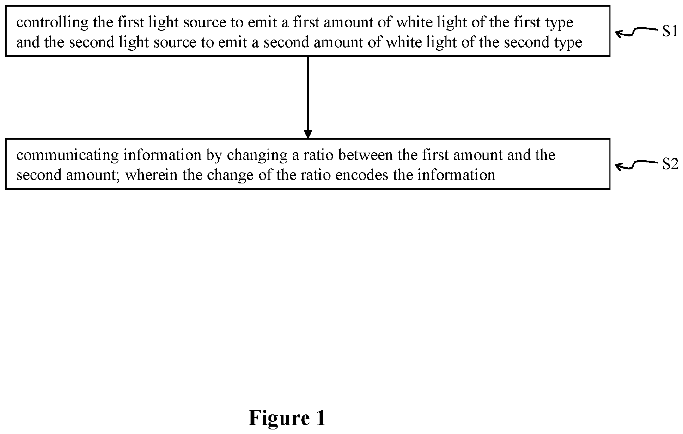

**FIG. 1** shows an example of a method according to an embodiment of the invention for wireless communication using white light of a tunable white luminaire. The method of FIG. 1 is an example of the method of the first aspect. Thus, the description of the method of the first aspect is correspondingly valid for the method of FIG. 1.

The method of FIG. 1 is a method for wireless communication using white light of a tunable white luminaire. The tunable white luminaire comprises a first and second light source emitting white light of a first type and white light of a second type, respectively. A shown in FIG. 1, the method comprises a step S1 of controlling the first light source to emit a first amount of white light of the first type and the second light source to emit a second amount of white light of the second type. This allows providing an illumination with white light by the tunable white luminaire, wherein the characteristic of the white light illumination, e.g. correlated color temperature (CCT), is set by the first amount of white light of the first type and second amount of white light of the second type. The method comprises a step S2 of communicating information by changing a ratio between the first amount and the second amount; wherein the change of the ratio encodes the information. This allows a wireless communication of information with the advantages described above with regard to the method of the first aspect.

Changing the ratio of the first amount and second amount changes the spectrum of the white light emitted by the tunable white luminaire. This change of the white light's spectrum may encode information. In other words, the ratio between the first amount and second amount may be modulated, wherein the modulation of the ratio encodes information on the white light of the tunable white luminaire.

Optionally, the information to be wirelessly communicated may be digitally encoded to a digital signal, and the white light emitted by the tunable white luminaire may be modulated according to the digital signal by changing the ratio between the first amount and the second amount according to the digital signal.

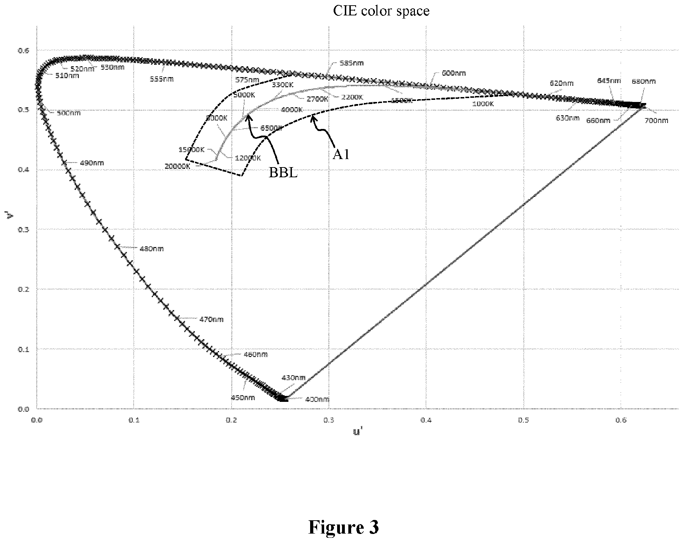

For further details on the method of FIG. 1, reference is made to the description of the first aspect and the description of FIGs. 3 to 7.

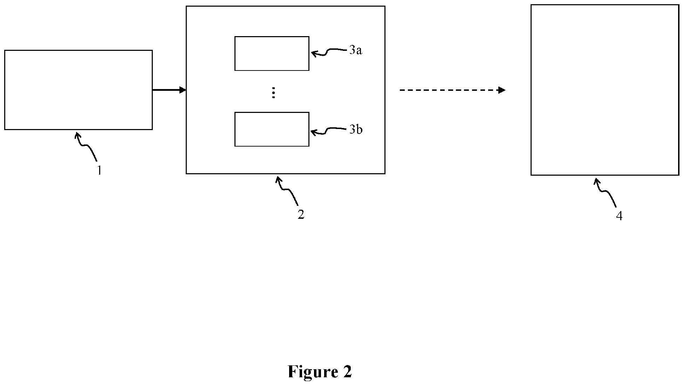

**FIG. 2** shows an example of a control entity according to an embodiment of the invention for controlling a tunable white luminaire. The control entity of FIG. 2 is an example of the control entity of the third aspect. Thus, the description of the control entity of the third aspect is correspondingly valid for the control entity of FIG. 2.

FIG. 2 shows a control entity 1 for controlling a tunable white luminaire 2 comprising a first and second white light source 3a and 3b, wherein the first light source 3a is configured to emit white light of a first type and the second light source 3b is configured to emit white light of a second type. The number of white light sources 3a, 3b of the tunable white luminaire 2 shown in FIG. 2 is only by way of example.

Optionally the tunable white luminaire 2 may comprise more than two white light sources. In the following description, it is assumed that there are two white light sources. However, the description of FIG. 2 is correspondingly valid in case there are more than two white light sources of the tunable white luminaire 2.

The control entity 1 is configured to perform the method according to the first aspect of the invention, as described above. That is, the control entity 1 is configured to control the tunable white luminaire 2 such that the luminaire 2 performs the method of the first aspect. The first light source 3b of the tunable white luminaire 2 is configured to emit white light of a first type. The second light source 3b of the tunable white luminaire 2 is configured to emit white light of a second type.

The control entity 1 is configured to perform the method of Figure 1. That is, the control entity 1 is configured to control the first light source 3a of the luminaire 2 to emit a first amount of the white light of the first type and the second light source 3b to emit a second amount of white light of the second type. This allows providing an illumination with white light by the tunable white luminaire. The control entity 1 may be configured to control the tunable white luminaire 2 to communicate information by changing a ratio between the first amount and the second amount; wherein the change of the ratio encodes the information. This allows a wireless communication of information with the advantages described above with regard to the method of the first aspect.

The control entity 1 may be implemented by software and/or hardware. The control entity may comprise at least one of a controller, microcontroller, processor, microprocessor, application specific integrated circuit (ASIC) and field programmable gate array (FPGA).

The first and second light source 3a, 3b of the luminaire 2 may comprise one or more light emitting diodes (LEDs). The first and second light source 3a ,3b are not limited to a specific implementation, e.g. a specific light source type.

The tunable white luminaire 2 may be a conventional tunable white luminaire. Optionally, in case the tunable white luminaire 2 comprises the control entity 1, e.g. in the form of software or in the form of software and hardware, the tunable white luminaire 2 may be the tunable white luminaire according to the fourth aspect. The description of the tunable white luminaire of the fourth aspect is then correspondingly valid for the tunable white luminaire 2 of FIG. 2.

As indicated by the dashed arrow the information may be wirelessly communicated from the tunable white luminaire 2, as described above, to another entity 4, for which the information is intended. This entity 4 is referred to as receiver 4. The receiver 4 is configured to receive the information encoded on the white light from the tunable white luminaire 2. The receiver 4 may be configured to decode the information based on a change of at least one of the correlated color temperature (CCT) of the white light, the distance of the white light's locus in the CIE color space from the black body locus (BBL), and the melanopic content of the white light. For example the receiver 4 may be configured to detect the relative contributions of the first and second light source 3a and 3b of the tunable white luminaire 2 and determine (e.g. decode) the information from a change of a difference between the relative contributions of the first and second light source 3a and 3b.

The communication from the tunable white luminaire 2 to the receiver 4 using the white light is a unidirectional communication. That is, the communication using the white light from the tunable white luminaire 2 to the receiver 4 may provide a one-way channel from the tunable white luminaire 2 to the receiver 4. In case the receiver is configured to transmit information to the tunable white luminaire 2, a bi-directional communication is possible between the tunable white luminaire 2 and the receiver 4. In this case, the receiver may optionally be or comprise a tunable white light device (e.g. tunable white luminaire) comprising at least two light sources for transmitting information to the tunable white luminaire 2 by encoding the information on the white light. The tunable white light device may be implemented like the tunable white luminaire 2. In this optional case, the tunable white luminaire 2 may be configured to perform the function of the receiver 4, i.e. decode the information from the white light received from the receiver 4. In addition or alternatively, a communication from the receiver 4 to the tunable white luminaire 2 may use at least one of radio signals, infrared (IR) and electrical communication, e.g. via a control channel of DALI. DALI stands for "digital addressable lighting interface" and is a known standard in the field of lighting. DALI may refer to the DALI standard (also referred to as DALI-1 or DALI edition 1) or the follow-up standard DALI-2 (also referred to as DALI edition 2). The communication from the receiver 4 to the tunable white luminaire 2 may be referred to as "return channel". The return channel might be a second luminaire with a receiver, which is sending commands to the first luminaire via DALI bus, but receiving optical communication over the tuneable white channel. This can be a method to do auto-commissioning of luminaires.

The receiver 4 may be configured to perform an action using the information received from the tunable white luminaire 2 via the white light. For example, in case the information encoded on the white light comprises a serial number of the luminaire 2, the receiver 4 may use this information for commissioning the luminaire 2, e.g. by assigning a position to the luminaire 2. For example, in case the information encoded on the white light comprises a position of the luminaire 2, the receiver 4 may use this information for commissioning the luminaire 2, e.g. by assigning an address (e.g. communication address) to the luminaire 2.

The receiver 4 may be configured to perform the method of the second aspect. Thus, the description of the method of the second aspect is correspondingly valid for the receiver 4. In case the tunable white luminaire 2 is configured to decode information from white light, the description of the method of the second aspect may be correspondingly valid for the tunable white luminaire 2.

**FIG. 3** shows the CIE color space in a u'v'-graph, wherein the area of white light emission is indicated. The CIE color space may also be referred to as (u', v') chromaticity diagram.

The CIE color space is well known and, thus, a detailed description of the CIE color space shown in FIG. 3 is omitted herein. The black body locus (BBL) is shown in the CIE color space of FIG. 3. The BBL may also be referred to as "Planckian locus". Further the area A1 is indicated in the CIE color space. This area A1 corresponds to white light.

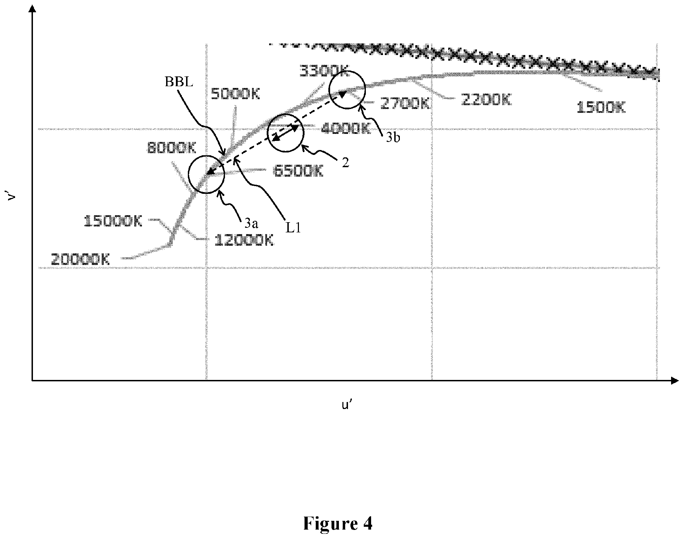

**FIG. 4** shows an example of the method of FIG. 1, in case the tunable white luminaire comprises two light sources emitting white light of different correlated color temperatures (CCT). FIG. 4 shows a section of the CIE color space of FIG. 3 corresponding to white light emission. The description of the method of FIG. 1 is correspondingly valid for FIG. 4. In the description of FIGs. 4 to 7, reference is made to the tunable white luminaire of FIG. 2.

In the example of FIG. 4, it is assumed that the first light source 3a of the tunable white luminaire 2 emits white light of a CCT of 6500 K, wherein the locus of the emitted white light lays on the BBL. Further, it is assumed that the second light source 3b of the tunable white luminaire 2 emits white light of a CCT of 2700 K, wherein the locus of the emitted white light lays on the BBL. Thus, as shown in FIG. 4, when the first light source 3a emits light and the second light source 3b does not emit light, the white light of the tunable white luminaire 2 will be white light of a CCT of 6500 K and with a locus on the BBL. As shown in FIG. 4, when the second light source 3b emits light and the first light source 3a does not emit light, the white light of the tunable white luminaire 2 will be white light of a CCT of 2700 K and with a locus on the BBL.

When both light sources 3a and 3b emit light, the CCT of the white light emitted by the tunable white luminaire 2 will have a CCT between 6500 K and 2700 K corresponding to a point on the BBL that is crossed by a straight line perpendicular to the line L1 indicated in FIG. 4 (in u,v-color space: Judd's lines, isotemperature lines), wherein the CCT of the white light depends on the ratio between the first amount of white light of the first light source 3a and the second amount of white light of the second light source 3b. The greater the first amount compared to the second amount the closer the CCT of the tunable white luminaire's white light to the CCT of 6500 K and vice versa. The greater the second amount compared to the first amount the closer the CCT of the tunable white luminaire's white light to the CCT of 2700 K and vice versa. The locus of the tunable white luminaire's white light in the CIE color space will move along the line L1 depending on the ratio between the first amount of white light of the first light source 3a and the second amount of white light of the second light source 3b.

Thus, as shown in FIG. 4, by changing the ratio between the first amount of white light of the first light source 3a and the second amount of white light of the second light source 3b, the CCT of the tunable white luminaire's white light may be changed. This changes the spectrum of the tunable white luminaire's white light. This allows modulating information on the tunable white luminaire's white light. For example, the information may be digitally encoded to a digital signal, and the white light emitted by the tunable white luminaire 2 may be modulated according to the digital signal by changing the ratio between the first amount and second amount according to the digital signal. This allows digitally encoding the information on the tunable white luminaire's white light.

Therefore, a receiver that is sensitive to a change of the CCT may recognize the modulation, e.g. digital modulation, of the information on the white light and, thus, may decode (i.e. retrieve) the information from the white light.

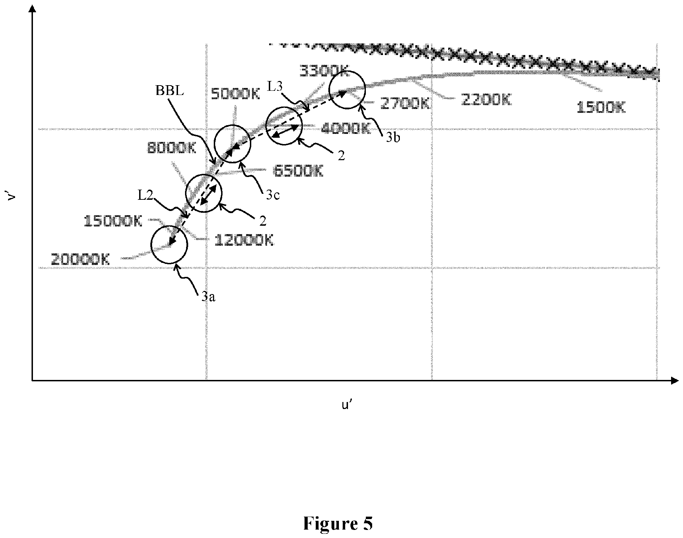

**FIG. 5** shows an example of the method of FIG. 1, in case the tunable white luminaire comprises three light sources emitting white light of different correlated color temperatures (CCT). FIG. 5 shows a section of the CIE color space of FIG. 3 corresponding to white light emission. The description of the method of FIG. 1 is correspondingly valid for FIG. 5.

In the example of FIG. 5 the same scenario as in the example of FIG. 4 is considered, with the difference that the first light source 3a is assumed to emit light of a CCT of 20000 K (instead of a CCT of 6500 K of the example of FIG. 4) and the additional assumption is made that the tunable white luminaire 2 comprises a third light source 3c that emits white light of a CCT of 5000 K, wherein the locus of the emitted white light lays on the BBL. The description of FIG. 4 is correspondingly valid for the example of FIG. 5 and in the following, mainly the additional feature of the example of FIG. 5 is described.

When the first and third light source 3a and 3c emit light, the CCT of the white light emitted by the tunable white luminaire 2 will have a CCT between 20000 K and 5000 K corresponding to a point on the BBL that is crossed by a straight line perpendicular to the line L2 indicated in FIG. 5, wherein the CCT of the white light depends on the ratio between the first amount of white light emitted by the first light source 3a and a third amount of white light emitted by the third light source 3c. The greater the first amount compared to the third amount the closer the CCT of the tunable white luminaire's white light to the CCT of 20000 K and vice versa. The greater the third amount compared to the first amount the closer the CCT of the tunable white luminaire's white light to the CCT of 5000 K and vice versa. The locus of the tunable white luminaire's white light in the CIE color space will move along the line L2 depending on the ratio between the first amount of white light of the first light source 3a and the third amount of white light of the third light source 3c.

When the second and third light source 3b and 3c emit light, the CCT of the white light emitted by the tunable white luminaire 2 will have a CCT between 5000 K and 2700 K corresponding to a point on the BBL that is crossed by a straight line perpendicular to the line L3 indicated in FIG. 5, wherein the CCT of the white light depends on the ratio between the second amount of white light emitted by the second light source 3b and the third amount of white light emitted by the third light source 3c. The greater the second amount compared to the third amount the closer the CCT of the tunable white luminaire's white light to the CCT of 2700 K and vice versa. The greater the third amount compared to the second amount the closer the CCT of the tunable white luminaire's white light to the CCT of 5000 K and vice versa. The locus of the tunable white luminaire's white light in the CIE color space will move along the line L3 depending on the ratio between the second amount of white light of the second light source 3b and the third amount of white light of the third light source 3c.

Thus, as shown in FIG. 5, by changing the ratio between the first amount of white light of the first light source 3a, the second amount of white light of the second light source 3b, and the third amount of white light of the third light source 3c, the CCT of the tunable white luminaire's white light may be changed. This changes the spectrum of the tunable white luminaire's white light.

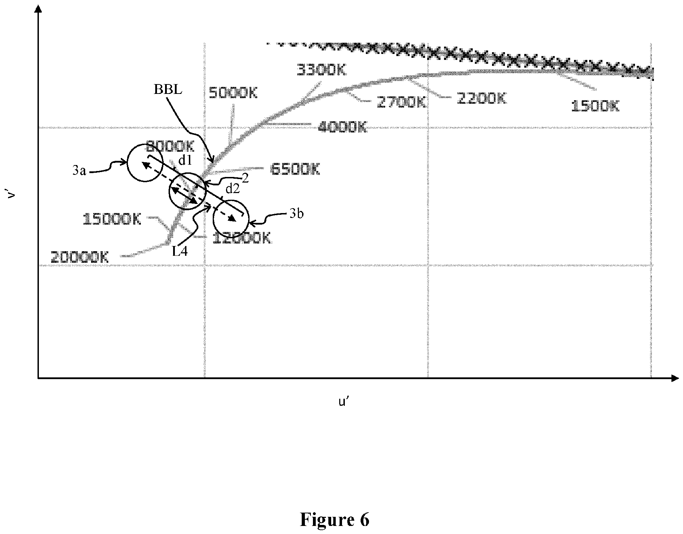

**FIG. 6** shows an example of the method of FIG. 1, in case the tunable white luminaire comprises two light sources emitting white light with different distances between the white light's locus in the CIE color space and the black body locus (BBL). FIG. 6 shows a section of the CIE color space of FIG. 3 corresponding to white light emission. The description of the method of FIG. 1 is correspondingly valid for FIG. 6.

In the example of FIG. 6, it is assumed that the first light source 3a of the tunable white luminaire 2 emits white light of a CCT of 8000 K, wherein the locus of the emitted white light is a first distance d1 away from the BBL. Further, it is assumed that the second light source 3b of the tunable white luminaire 2 emits white light of a CCT of 8000 K, wherein the locus of the emitted white light is a second distance d2 away from the BBL. Thus, as shown in FIG. 6, when the first light source 3a emits light and the second light source 3b does not emit light, the white light of the tunable white luminaire 2 will be white light of a CCT of 8000 K and with a locus being the first distance d1 away from the BBL. As shown in FIG. 6, when the second light source 3b emits light and the first light source 3a does not emit light, the white light of the tunable white luminaire 2 will be white light of a CCT of 8000 K and with a locus being the second distance d2 away from the BBL.

When both light sources 3a and 3b emit light, the distance of the locus of the white light emitted by the tunable white luminaire 2 to the BBL will be a distance between the first distance d1 and zero distance (i.e. locus on the BBL) or a distance between the second distance d2 and zero distance (i.e. locus on the BBL) on the line L4. The distance of the locus of the white light emitted by the tunable white luminaire 2 to the BBL depends on the ratio between the first amount of white light of the first light source 3a and the second amount of white light of the second light source 3b. The greater the first amount compared to the second amount the closer the distance to the first distance d1, wherein the tunable white luminaire's white light's locus will lay above the BBL. The greater the second amount compared to the first amount the closer the distance to the second distance d2, wherein the tunable white luminaire's white light's locus will lay below the BBL. For a specific ratio between the first amount and second amount the locus of the white light of the tunable white luminaire 2 will lay on the BBL. The locus of the tunable white luminaire's white light in the CIE color space will move along the line L4 depending on the ratio between the first amount of white light of the first light source 3a and the second amount of white light of the second light source 3b.

Thus, as shown in FIG. 6, by changing the ratio between the first amount of white light of the first light source 3a and the second amount of white light of the second light source 3b, the distance of the locus in the CIE color space of the tunable white luminaire's white light to the BBL may be changed. This changes the spectrum of the tunable white luminaire's white light. This allows modulating information on the tunable white luminaire's white light. For example, the information may be digitally encoded to a digital signal, and the white light emitted by the tunable white luminaire 2 may be modulated according to the digital signal by changing the ratio between the first amount and second amount according to the digital signal. This allows digitally encoding the information on the tunable white luminaire's white light.

Therefore, a receiver that is sensitive to a change of a distance of the locus in the CIE color space of the tunable white luminaire's white light to the BBL may recognize the modulation, e.g. digital modulation, of the information on the white light and, thus, may decode (i.e. retrieve) the information from the white light.

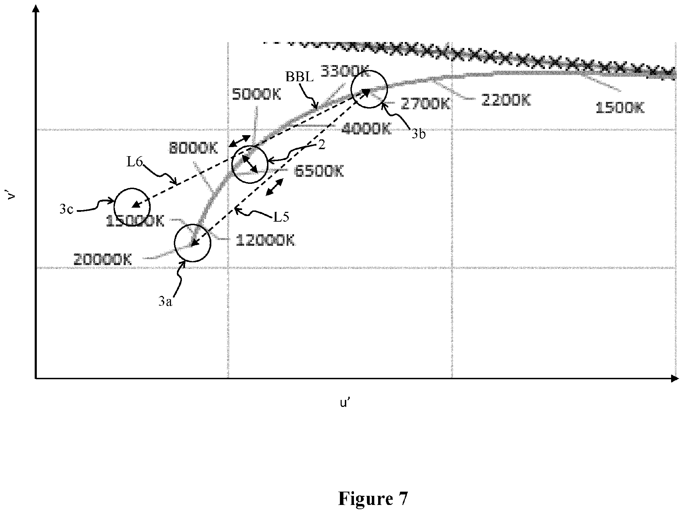

**FIG. 7** shows an example of the method of FIG. 1, in case the tunable white luminaire comprises three light sources emitting white light with different distances between the white light's locus in the CIE color space and the black body locus (BBL) and different correlated color temperatures (CCT). FIG. 7 shows a section of the CIE color space of FIG. 3 corresponding to white light emission. The description of the method of FIG. 1 is correspondingly valid for FIG. 7.

In the example of FIG. 7 the same scenario as in the example of FIG. 5 is considered, with the difference that the third light source 3c emits white light having a CCT of 20000 K, but a locus that is not on the BBL but a distance away from the BBL. The description of FIGs. 4 to 6 are correspondingly valid for the example of FIG. 7. As shown in FIG. 7, when the first and second light source 3a, 3b emit white light, the locus of the white light of the tunable white luminaire 2 will move along the line L5 indicated in FIG. 7 depending on the ratio between the first amount of white light of the first light source 3a and the second amount of white light of the second light source 3b. When the second and third light source 3b, 3c emit white light, the locus of the white light of the tunable white luminaire 2 will move along the line L6 indicated in FIG. 7 depending on the ratio between the second amount of white light of the second light source 3b and the third amount of white light of the third light source 3c.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method for wireless communication using white light of a tunable white luminaire comprising a first and second light source emitting white light of a first type and white light of a second type, respectively, wherein the method comprises:
- controlling (S1) the first light source to emit a first amount of white light of the first type and the second light source to emit a second amount of white light of the second type, and
- communicating (S2) information by changing a ratio between the first amount and the second amount; wherein the change of the ratio encodes the information.

2. The method according to claim 1, wherein communicating the information comprises
- changing the ratio between the first amount and the second amount with a frequency that is not visible for the human eye, and/or
- changing the ratio between the first amount and the second amount by a degree that is not visible for the human eye.

3. The method according to claim 1 or 2, wherein changing the ratio between the first amount and second amount comprises
- changing the first amount between at least two values, and/or
- changing the second amount between at least two values.

4. The method according to any one of the previous claims, wherein controlling the first light source and the second light source comprises
- controlling the first light source to emit white light with a first correlated color temperature, CCT, and the second light source to emit white light with a second CCT that is different from the first CCT.

5. The method according to any one of the previous claims, wherein controlling the first light source and the second light source comprises
- controlling the first light source to emit white light with a locus in the CIE color space that is a first distance away from the black body locus, BBL, and the second white light source to emit white light with a locus in the CIE color space that is a second distance away from the BBL that is different from the first distance.

6. The method according to any one of the previous claims, wherein controlling the first light source and the second light source comprises
- controlling the first white light source to emit white light with a first melanopic effective spectral component and the second white light source to emit white light with a second melanopic effective spectral component that is different from the first melanopic effective spectral component.

7. The method according to claim 5 or 6, wherein controlling the first light source and the second light source comprises
- controlling the first light source and the second light source to emit white light with the same CCT.

8. The method according to any one of the previous claims, wherein the method comprises
- digitally encoding the information to a digital signal, and
- modulating the white light emitted by the tunable white luminaire according to the digital signal by changing the ratio between the first amount and the second amount according to the digital signal.

9. The method according to claim 8, wherein modulating the white light emitted by the tunable white luminaire according to the digital signal is done with a frequency in a frequency range, optionally with a fixed frequency.

10. The method according to any one of the previous claims, wherein the method comprises
- performing an amplitude modulation of at least one of the CCT, the distance of the locus in the CIE color space to the BBL and the melanopic content of the white light emitted by the tunable white luminaire by controlling a change of the first amount of the white light of the first type and/or the second amount of the white light of the second type.

11. The method according to any one of the previous claims, wherein the method comprises
- performing a phase-shift keying modulation of at least one of the CCT, the distance of the locus in the CIE color space to the BBL and the melanopic content of the white light emitted by the tunable white luminaire by controlling a change of the first amount of the white light of the first type and/or the second amount of the white light of the second type.

12. The method according to any one of the previous claims, wherein the tunable white luminaire comprises at least one further light source emitting white light of a further type that is different to the light of the first type and light of the second type, wherein the method comprises:
- controlling the further light source to emit a third amount of white light of the further type, and
- communicating information by changing a ratio between the first amount, the second amount and the third amount; wherein the change of the ratio encodes the information.

13. A method for receiving information encoded on white light, wherein the method comprises
- decoding the information based on a change of at least one of the correlated color temperature, CCT, of the white light, the distance of the white light's locus in the CIE color space from the black body locus, BBL, and the melanopic content of the white light.

14. Control entity (1) for controlling a tunable white luminaire (2) comprising a first and second white light source (3a, 3b), the first and second white light source (3a, 3b) being configured to emit white light of a first type and white light of a second type, respectively, wherein
- the control entity (1) is configured to perform the method according to any one of claims 1 to 12.

15. A tunable white luminaire (2) comprising,
- a first and second light source (3a, 3b), wherein
- the first light source (3a) is configured to emit a first amount of white light of a first type,
- the second light source (3b) is configured to emit a second amount of white light of a second first type, and
- the tunable white luminaire (2) is configured to communicate information by emitting white light and changing a ratio between the first amount and the second amount; wherein the change of the ratio encodes the information.
